# FASCICULE DE BREVET EUROPEEN

(11) **EP 1 957 788 B1**
(45) Date de publication et mention de la délivrance du brevet: **01.09.2010**
(21) Numéro de dépôt: 06842027.2
(22) Date de dépôt: 23.11.2006
(51) Int. Cl.: F02M 35/112

(54) **REPARTITEUR D'AIR D'ALIMENTATION AMELIORE POUR MOTEUR A COMBUSTION INTERNE**
VERBESSERTER LUFTZUFUHRVERTEILER FÜR EINEN VERBRENNUNGSMOTOR
IMPROVED AIR SUPPLY DISTRIBUTOR FOR AN INTERNAL COMBUSTION ENGINE

(30) Priorité: 01.12.2005 FR 0512205
(43) Date de publication de la demande: 20.08.2008
(73) Titulaire: RENAULT S.A.S., 92100 Boulogne Billancourt (FR)
(72) Inventeur: ALIZON, Franck, F-78480 Verneuil-sur-Seine (FR); ANTHOINE, Pierre, F-92500 Rueil-Malmaison (FR)
(74) Mandataire: Religieux, Vincent
(86) Numéro de dépôt international: PCT/FR2006/051216
(87) Numéro de publication internationale: WO 2007/063239

(56) Documents cités:
- EP-A- 1 455 081
- DE-A1- 10 028 047
- PATENT ABSTRACTS OF JAPAN vol. 2003, no. 07, 3 juillet 2003 (2003-07-03) & JP 2003 074357 A (HONDA MOTOR CO LTD), 12 mars 2003 (2003-03-12)
- PATENT ABSTRACTS OF JAPAN vol. 2000, no. 03, 30 mars 2000 (2000-03-30) & JP 11 350963 A (YANMAR DIESEL ENGINE CO LTD), 21 décembre 1999 (1999-12-21)

## Description

La présente invention concerne un répartiteur de l'air admis dans les cylindres d'un moteur à combustion interne, notamment pour véhicules automobiles, étant entendu que le terme « air » doit être pris dans son sens large et notamment pour couvrir tout mélange d'admission gazeux, notamment des mélanges air/carburant.

D'une façon générale, la répartition de l'air admis dans les cylindres d'un moteur à combustion interne est réalisée en cherchant à éliminer ou réduire sensiblement tout déséquilibre dans l'alimentation de chacun des cylindres, tant au niveau d'un même cylindre en cas de pluralité de conduits d'alimentation qu'au niveau de la répartition entre les cylindres. En particulier dans les moteurs de type diesel pour lesquels l'aérodynamique des gaz d'admission est critique, il a été remarqué des baisses du 'swirl' dans certains cylindres, en particulier dans le premier cylindre distribué, qui auraient pour origine la géométrie du répartiteur (le 'swirl' pouvant être défini comme un tourbillon axial dans le cylindre). Il en est ainsi, en particulier pour des répartiteurs d'air coudés à 180°, notamment lorsque, pour des raisons d'encombrement et de compacité des moteurs destinés à être montés dans le compartiment moteur d'un véhicule automobile, le coude est incliné par rapport à un plan de référence diamétral au corps tubulaire et passant par la droite d'alignement des embranchements des canaux de jonctions des conduits d'alimentation des cylindres.

L'invention a pour but un répartiteur à alimentation améliorée au niveau du premier cylindre distribué eu égard à la géométrie du répartiteur et notamment de remédier aux inconvénients décrits ci-avant.

On connaît, notamment de la publication JP2003074357, un répartiteur d'air pour moteur à combustion interne du type à deux soupapes d'admission par cylindre à entrée d'air axiale en extrémité et dans lequel les courbures des canaux de jonction sont adaptées pour uniformiser le 'swirl' entre les cylindres. On connaît également de la publication JP63208616, un répartiteur d'air pour moteur à combustion interne à quatre cylindres en ligne, à une soupape d'admission par cylindre, à entrée centrale latérale entre le second et le troisième cylindre et dans lequel l'entrée du canal de jonction du troisième cylindre comporte un guide d'air pour donner aux lignes de courant, en amont de la culasse, le même rayon de courbure qu'au second cylindre. On connaît également de la publication JP113509963, un répartiteur d'air sans canaux de jonction pour moteur à combustion interne à trois cylindres en ligne du type à une soupape d'admission et dans lequel sont disposées des projections d'adaptation à profil constant entre les premier et second cylindres distribués et entre le second et le troisième cylindre distribués. On notera que les solutions proposées dans ces trois publications japonaises pour équilibrer le 'swirl' entre les cylindres ne concernent que des répartiteurs d'air de structures particulières tout à fait distinctes des répartiteurs d'air coudés et pour lesquelles les perturbations aérodynamiques internes liées à ou induites par ces répartiteurs connus n'existent pas.

L'invention propose un répartiteur d'air pour moteur à combustion interne comportant au moins une pluralité de cylindres en ligne, ledit répartiteur comportant un corps principal tubulaire sensiblement cylindrique pourvu de canaux de jonction latéraux pour l'alimentation des cylindres et dont les embranchements avec le corps principal tubulaire débouchent sensiblement de façon alignée sur une génératrice dudit corps principal tubulaire, le corps principal tubulaire étant prolongé en amont desdits embranchements d'un coude sensiblement à 180° ouvrant sur un orifice d'entrée d'air, ledit coude étant incliné d'un angle α par rapport au plan diamétral dudit corps principal incorporant la génératrice d'alignement des embranchements, caractérisé en ce qu'il comporte en amont et au voisinage de ou des embranchements du ou des canaux de jonction du premier cylindre distribué et du côté de l'inclinaison du coude une rampe d'étranglement partiel de la section d'écoulement d'air du corps principal.

Ainsi qu'il apparaîtra dans la description, un tel agencement d'une part intervient sur l'aérodynamique interne du répartiteur et permet de retrouver un niveau de 'swirl' sensiblement égal, dans le premier cylindre distribué, au niveau de 'swirl' sans répartiteur grâce à une remontée du 'swirl' dans le premier cylindre distribué et, dans le cas de répartiteurs selon l'invention à deux canaux de jonction par cylindre et utilisés avec des moteurs à deux soupapes d'admission par cylindre, de rééquilibrer les débits entre les deux canaux de jonction du même premier cylindre distribué.

Selon un mode de réalisation préférentiel, le répartiteur est adapté pour être monté parallèlement à la face d'admission correspondante de la culasse dudit moteur avec les canaux de jonction disposés en regard des conduits d'admission de la culasse, et correspondant à un cylindre, et parallèlement à l'alignement des cylindres de façon à ce que ledit plan diamétral soit normal à ladite face d'admission culasse. Un tel agencement permet d'améliorer la compacité du moteur équipé du répartiteur.

Selon une première variante de l'invention, le taux d'étranglement partiel est compris entre 2 et 10 % de la section d'écoulement.

Selon une autre variante de l'invention la rampe se présente sous la forme d'un tremplin asymétrique dont les faces amont et aval sont respectivement à faible et à forte pente. Avantageusement la rampe est inclinée latéralement par rapport audit plan diamétral. De façon préférentielle, la projection de crête de ladite rampe dans un plan normal audit corps tubulaire présente un angle d'inclinaison β par rapport audit plan diamétral compris entre 1 à 5 fois l'angle d'inclinaison α.

Selon encore une autre variante de l'invention, le répartiteur comporte sensiblement en sortie de coude en face et en amont par rapport à ladite rampe un bossage rentrant à extension sensiblement perpendiculaire à la direction de l'écoulement d'air dans le corps tubulaire. Avantageusement le bossage présente un profil convergent/divergent dans le sens de l'écoulement d'air dans le corps tubulaire. Un tel bossage ou bosse permet d'améliorer la perméabilité globale du répartiteur et en particulier pour le premier poste distribué, étant noté que la perméabilité d'une tubulure correspond à sa capacité à laisser passer un débit d'air pour une perte d'énergie donnée et étant donné que la présence de cette bosse permet de diminuer la hauteur du tremplin asymétrique susceptible d'engendrer une baisse de perméabilité.

Selon encore une autre variante selon l'invention le corps principal tubulaire cylindrique présente une section droite sensiblement rectangulaire à angles arrondis dont un petit côté correspond au flanc du corps tubulaire opposé au coude et porte lesdits embranchements alignés des canaux de jonction.

L'invention concerne également des moteurs à combustion interne, notamment pour véhicules automobiles, comportant au moins un répartiteur d'air selon l'invention dans toutes les variantes présentées ci-avant à un ou deux canaux de jonction d'admission par cylindre distribué et monté sur une face d'admission de la culasse dudit moteur. En particulier des moteurs à combustion interne de type diesel, notamment pour véhicule automobile, comportant au moins un répartiteur d'air selon l'invention dans toutes les variantes présentées ci-avant à un ou deux canaux de jonction par cylindre distribué et monté sur une face d'admission de la culasse dudit moteur

D'autres caractéristiques et avantages de la présente invention apparaîtront à la lecture de la description qui va suivre présentée uniquement à titre d'exemple non limitatif en référence aux dessins ci-joints dans lesquels:
- la figure 1 montre une vue schématique de dessus d'un premier mode de réalisation d'un répartiteur d'air selon l'invention en place le long de la face d'admission d'une culasse de moteur à combustion interne ;
- la figure 2 montre une vue schématique selon la coupe AA agrandie du répartiteur d'air de la figure 1 ;
- la figure 3 montre une vue schématique de dessous d'un second mode de réalisation d'un répartiteur d'air selon l'invention en place le long de la face d'admission d'une culasse de moteur à combustion interne ;
- la figure 4 montre une vue schématique selon la coupe BB agrandie du répartiteur d'air de la figure 3 ; et
- la figure 5 montre une vue schématique, partielle, agrandie et avec arrachement partiel du répartiteur d'air de la figure 3.

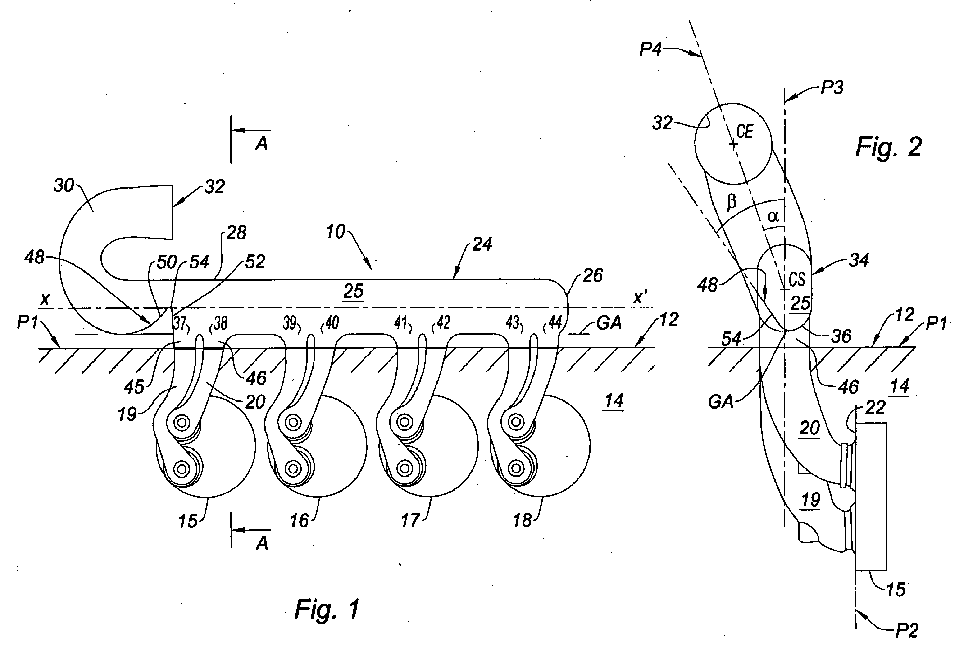

Le répartiteur d'air d'admission 10 représenté sur les figures 1 et 2 est montré en position opérationnelle fixé à la face d'admission 12 de la culasse 14 d'un moteur à combustion interne à quatre cylindres en ligne 15, 16, 17 et 18. A titre d'exemple non limitatif le moteur à combustion interne intégrant la culasse 14 est de type diesel, notamment pour véhicule automobile, mais sans sortir du cadre de l'invention le moteur à combustion interne peut être d'un type différent, par exemple un moteur 4 temps à essence notamment pour véhicule automobile.

Si l'on considère les figures 1 et 2, on peut remarquer que la face admission culasse 12 s'étend dans le plan P1 normal au plan des figures 1 et 2 de telle sorte que sur la figure 1, les cylindres 15 à 18 sont représentés vus de dessus avec chacun des deux conduits d'alimentation distincts, par exemple pour le cylindre 15, premier cylindre distribué, les conduits 19 et 20 dont les extrémités, débouchant sur la tête du cylindre 15 au niveau de la face feu 22, portent chacune le siège d'une des deux soupapes d'alimentation (non représentées). Pour la clarté du dessin, les soupapes d'échappement n'ont pas non plus été représentées. Comme illustré sur la figure 2, la face feu 16 s'étend dans un plan P2 normal au plan des figures 1 et 2 et au plan P1.

Le répartiteur d'air 10 se présente sous la forme d'une tubulure coudée en alliage léger obtenue par moulage soit dé façon monobloc soit par éléments séparés convenablement assemblés. Le répartiteur 10 est principalement constitué d'un corps principal tubulaire cylindrique 24 d'axe XX' et, lorsque le répartiteur est monté de façon opérationnelle sur la culasse 14, parallèle à la face d'admission 12 et à la face feu 22. Le corps 24 qui présente une première extrémité 26 fermée au niveau du dernier cylindre distribué, le cylindre 18, est prolongé à son autre extrémité 28 par un coude 30 à 180° ouvrant sur un orifice d'entrée ou d'admission d'air 32 convenablement reliée aux conduites et dispositifs d'alimentation du moteur (non représentés). Comme on peut le voir sur la figure 2 le corps tubulaire cylindrique 24 présente, à titre d'exemple non limitatif, une section droite 34 de forme sensiblement rectangulaires à angles arrondis dont un petit côté 36 correspondant au flanc du corps 24 opposé au coude 32 porte les embranchements 37, 38, 39, 40, 41, 42, 43, 44 des canaux de jonction du répartiteur 10 et destinés à être raccordés aux conduits d'alimentation des quatre cylindres, par exemple pour le premier cylindre distribué 15 les embranchements 37 et 38 sont respectivement appariés aux canaux de jonction 45 et 46 convenablement connectés aux conduits d'alimentation 19 et 20 réalisés dans la culasse 14. Comme on peut le voir sur les figures 1 et 2 les embranchements 37 à 44 appariés en tandem sont sensiblement alignés sur la génératrice GA du corps tubulaire cylindrique 24 parallèle à l'axe XX' et comprise comme ce dernier axe dans le plan diamétral P3 du corps principal 24, lequel plan diamétral P3 est parallèle au plan P2 de la face feu, une fois le répartiteur 10 monté sur la culasse.

Si l'on considère la figure 2, on peut remarquer que le coude 30 est incliné par rapport au plan diamétral P3 d'un angle d'inclinaison α défini entre le plan P3 et le plan médian P4 du coude 30 défini à titre d'exemple non limitatif comme un plan normal au plan de la figure 2 et passant par les centres CE et CS des sections d'entrée et de sortie du coude 30 dans le sens de l'écoulement. L'angle α est choisi en général assez faible, préférence entre 10 et 25°, dans le cas présent de l'ordre 20° vers la gauche de la figure 2 à partir de P3.

Selon l'invention, une rampe d'étranglement partiel 48 est disposée, comme illustrée sur les figures 1 et 2, en sortie du coude 30 au voisinage de l'embranchement 37 du canal de jonction 45 du premier cylindre distribué 15 du côté de l'inclinaison du coude par rapport au plan diamétral P3 et sensiblement à l'opposé et à l'extérieur du coude (c.à.d. sur le côté 36 correspondant à l'extérieur du coude et sur lequel sont placés les embranchements de jonction 37 à 44). La rampe 48 se présente sous la forme d'un tremplin asymétrique dont les faces amont 50 et aval 52 sont respectivement à faible et à forte pente, en l'espèce telle que représentée sur la figure 1 la face 52 est abrupte et à la limite de l'embranchement 37. De plus la rampe 48 est inclinée latéralement par rapport au plan diamétral P3 comme illustrée sur la figure 2. De façon préférentielle non limitative, la projection de la crête 54 de la rampe 48 dans un plan normal audit corps tubulaire 28 (le plan de coupe AA ou plan de la figure 2) et présente un angle d'inclinaison β par rapport au plan diamétral P3 compris entre 1 à 5 fois l'angle d'inclinaison α, en l'espèce de l'ordre de 40°. D'une façon générale la rampe d'étranglement 48 rentrante dans le conduit interne 25 du corps tubulaire est réalisée directement à la coulée de celui-ci ou au travers d'une pièce rapportée en interne (ou en cas de répartiteur mécano-soudé par un enfoncement approprié de la paroi répartiteur au niveau de la zone frontière coude/corps tubulaire). Le taux d'étranglement partiel est de préférence compris entre 2 et 10 % de la section d'écoulement (en l'espèce autour de 10% comme illustré à la figure 2).

Bien entendu sans sortir du cadre de l'invention le coude du répartiteur d'air peut être incliné dans l'autre sens vers la droite de la figure 2, par exemple de façon symétrique par rapport à P3, étant entendu que la rampe d'étranglement partiel correspondante sera également disposée symétriquement à la rampe 28 par rapport à ce plan P3.

La présence de la rampe 28 à une double fonction par rapport à l'aérodynamique de l'alimentation en air du premier cylindre distribué 15, d'une part de rétablir un niveau de 'swirl' sensiblement égal à la situation sans répartiteur compensant ainsi la baisse du 'swirl' dans ce cylindre 15 ayant son origine dans l'inclinaison du coude 30, d'autre part de rééquilibrer les débits entre les deux conduits d'alimentation 19 et 20 d'alimentation de même cylindre 15.

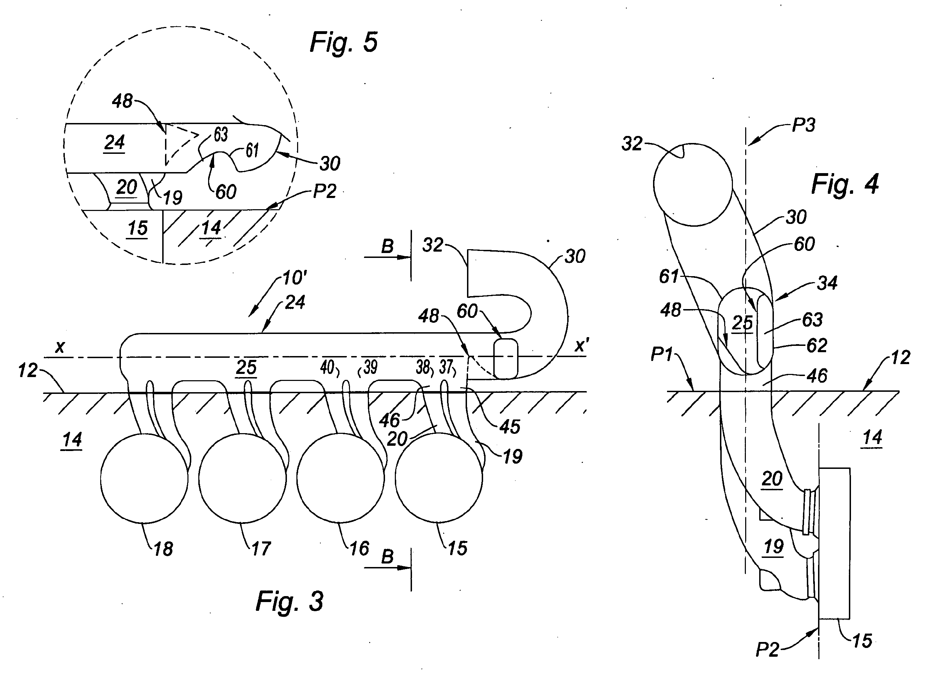

Le répartiteur d'air 10' selon l'invention est quasi-identique au répartiteur 10. Ainsi les éléments identiques des deux répartiteurs ne seront pas décrits à nouveau et portent les même références numériques. En particulier le répartiteur 10' est représenté sur la figure 3 en vue de dessous, avec la rampe d'étranglement partiel 48 montrée en pointillés. Les deux répartiteurs se distinguent par la présence sur le répartiteur 10' en sortie de coude 30 et en amont par rapport à la rampe 48 et sur côté opposé de celle-ci d'un bossage rentrant 60 s'étendant sensiblement perpendiculairement par rapport à l'axe XX', soit par rapport à l'écoulement dans le conduit interne 25 du corps tubulaire 24. Comme illustré en détails sur les figures 4 et 5 le bossage 60 s'étend transversalement parallèlement au plan P3 sur le flanc 62 du corps tubulaire 24 (opposé au flanc 61 associé à la rampe 48) sur toute la largeur de celui-ci (grand côté de la section droite 34) et présente un profil de type convergent/divergent (zone amont 61/zone aval 63). Le bossage 60 est en général venu de matière à la coulée du répartiteur d'air (il peut être également réalisé sous la forme d'une pièce rapportée ou, pour des répartiteur mécano-soudés, obtenu déformation de la paroi en sortie de coude). Le bossage 60 a principalement pour effet d'améliorer la perméabilité du répartiteur 10' (augmentation du débit d'air pour une perte d'énergie donnée) pour le premier poste distribué, le cylindre 15, sans nuire au gain aérodynamique du répartiteur d'air obtenu par la rampe ou tremplin 48. Il est ainsi possible d'au moins compenser la légère baisse de débit éventuellement provoquée par la présence de la rampe d'étranglement partiel 48. Le bossage 60 a pour effet d'améliorer l'efficacité aérodynamique de la rampe d'étranglement partiel 48 ce qui permet de diminuer sa hauteur et donc d'améliorer la perméabilité.

L'invention n'est pas limitée aux répartiteurs d'air et aux moteurs à deux conduits d'admission par cylindre précédemment décrits mais couvre également leurs variantes à un seul canal de jonction et un seul conduit d'admission par cylindre distribué.

## Revendications

1. Répartiteur d'air (10,10') pour moteur à combustion interne comportant au moins une pluralité de cylindres en ligne (15,16,17,18), ledit répartiteur comportant un corps principal tubulaire (24) sensiblement cylindrique pourvu de canaux de jonction latéraux (45,46) pour l'alimentation des cylindres et dont les embranchements (37,38,39,40,41,42,43,44) avec le corps principal tubulaire débouchent sensiblement de façon alignée sur une génératrice GA dudit corps principal tubulaire, le corps principal tubulaire (24) étant prolongé en amont desdits embranchements d'un coude (30) sensiblement à 180° ouvrant sur un orifice d'entrée d'air (32), ledit coude étant incliné d'un angle α par rapport au plan diamétral P3 dudit corps principal incorporant la génératrice GA d'alignement des embranchements, **caractérisé en ce qu'**il comporte en amont et au voisinage de ou des embranchements (37,38) du ou des canaux de jonction (45,46) du premier cylindre distribué (15) et du côté de l'inclinaison du coude une rampe d'étranglement partiel (48) de la section d'écoulement d'air du corps principal (24).

2. Répartiteur d'air (10,10') selon la revendication 1, **caractérisé en qu'**il est adapté pour être monté parallèlement à la face d'admission (12) correspondante de la culasse dudit moteur avec les canaux de jonction (37,38) disposés en regard des conduits d'admission (45,46) de la culasse correspondant à un cylindre et parallèlement à l'alignement des cylindres de façon à ce que ledit plan diamétral P3 soit normal à ladite face (12) d'admission culasse.

3. Répartiteur d'air (10,10') selon l'une des revendications 1 et 2, **caractérisé en ce que** le taux d'étranglement partiel est compris entre 2 et 10% de la section d'écoulement.

4. Répartiteur d'air (10,10') selon l'une des revendications 1 à 3, **caractérisé en ce que** ladite rampe (48) se présente sous la forme d'un tremplin asymétrique dont les faces amont (50) et aval (52) sont respectivement à faible et à forte pente.

5. Répartiteur d'air (10,10') selon l'une des revendications 1 à 4, **caractérisé en ce que** ladite rampe (48) est inclinée latéralement par rapport audit plan diamétral (P3).

6. Répartiteur d'air (10,10') selon la revendication 5, **caractérisé en ce que** la projection de la crête (54) de ladite rampe (48) dans un plan normal audit corps tubulaire (24) présente un angle d'inclinaison β par rapport audit plan diamétral compris entre 1 à 2 fois l'angle d'inclinaison α.

7. Répartiteur d'air (10') selon l'une des revendications 1 à 6, **caractérisé en ce qu'**il comporte sensiblement en sortie de coude (30) en face et en amont par rapport à ladite rampe (48) un bossage rentrant (60) à extension sensiblement perpendiculaire à la direction de l'écoulement d'air dans le corps tubulaire (24).

8. Répartiteur d'air (10') selon la revendication 7, **caractérisé en ce que** ledit bossage (60) présente un profil convergent/divergent (61,63) dans le sens de l'écoulement d'air dans le corps tubulaire (24).

9. Répartiteur d'air (10,10') selon l'une des revendications 1 à 8, **caractérisé en ce que** le corps principal tubulaire (24) cylindrique présente une section droite (34) sensiblement rectangulaire à angles arrondis dont un petit côté (36) correspond au flanc du corps tubulaire opposé au coude (30) et porte lesdits embranchements alignés (37,38,39,40,41,42,43,44) des canaux de jonction (45,46).

10. Répartiteur d'air (10,10') selon l'une des revendications 1 à 9, **caractérisé en ce qu'**il comporte deux canaux de jonction (37,38) d'admission par cylindre distribué (15).

11. Moteur à combustion interne, notamment pour véhicule automobile, comportant au moins un répartiteur d'air selon l'une des revendications 1 à 9 à un ou deux canaux de jonction d'admission par cylindre distribué et monté sur une face d'admission de la culasse dudit moteur.

12. Moteur à combustion interne de type diesel, notamment pour véhicule automobile, comportant au moins un répartiteur d'air selon l'une des revendications 1 à 9 à un ou deux canaux de jonction par cylindre distribué et monté sur une face d'admission de la culasse dudit moteur.

## Claims

1. Air distributor (10, 10') for an internal combustion engine comprising at least a plurality of cylinders in line (15, 16, 17, 18), said distributor comprising a substantially cylindrical main tubular body (24) provided with lateral connecting channels (45, 46) for supplying the cylinders, and whereof the branches (37, 38, 39, 40, 41, 42, 43, 44) with the main tubular body open in a substantially aligned manner along a generatrix GA of said main tubular body, the main tubular body (24) extending upstream of said branches by a substantially 180° elbow (30) opening on an air inlet (32), said elbow being inclined at an angle α to the diametral plane P3 of said main body containing the generatrix GA for alignment of the branches, **characterized in that** it comprises, upstream and in the neighborhood of the branch or branches (37, 38) of the connecting channel or channels (45, 46) of the first distributed cylinder (15) and on the elbow inclination side, a ramp (48) for partial throttling of the air flow area of the main body (24).

2. Air distributor (10, 10') according to Claim 1, **characterized in that** it is suitable for being mounted in parallel to the corresponding intake face (12) of the cylinder head of said engine with the connecting channels (37, 38) placed opposite the intake ducts (45, 46) of the cylinder head corresponding to a cylinder and parallel to the cylinder alignment, so that said diametral plane P3 is normal to said cylinder head intake face (12).

3. Air distributor (10, 10') according to either of Claims 1 and 2, **characterized in that** the partial throttling rate is between 2 and 10% of the flow area.

4. Air distributor (10, 10') according to one of Claims 1 to 3, **characterized in that** said ramp (48) is in the form of an asymmetrical wheel ramp whereof the upstream (50) and downstream (52) faces are gently- and steeply-inclined respectively.

5. Air distributor (10, 10') according to one of Claims 1 to 4, **characterized in that** said ramp (48) is laterally inclined to said diametral plane (P3).

6. Air distributor (10, 10') according to Claim 5, **characterized in that** the projection of the top (54) of said ramp (48) in a normal plane to said tubular body (24) has an angle of inclination β to said diametral plane of between 1 and 2 times the angle of inclination α.

7. Air distributor (10') according to one of Claims 1 to 6, **characterized in that** it comprises substantially at the elbow (30) outlet, facing and upstream of said ramp (48), a recess (60) having an extension substantially perpendicular to the air flow direction in the tubular body (24).

8. Air distributor (10') according to Claim 7, **characterized in that** said recess (60) has a convergent/divergent profile (61, 63) in the air flow direction in the tubular body (24).

9. Air distributor (10, 10') according to one of Claims 1 to 8, **characterized in that** the cylindrical main tubular body (24) has a substantially rectangular cross section (34) with rounded angles, whereof a small side (36) corresponds to the side of the tubular body opposite the elbow (30) and carries said aligned branches (37, 38, 39, 40, 41, 42, 43, 44) of the connecting channels (45, 46).

10. Air distributor (10, 10') according to one of Claims 1 to 9, **characterized in that** it comprises two connecting intake channels (37, 38) per distributed cylinder (15).

11. Internal combustion engine, in particular for a motor vehicle, comprising at least one air distributor according to one of Claims 1 to 9, having one or two connecting intake channels per distributed cylinder and mounted on an intake face of the cylinder head of said engine.

12. Internal combustion engine of the diesel type, in particular for a motor vehicle, comprising at least one air distributor according to one of claims 1 to 9, having one or two connecting channels per distributed cylinder and mounted on an intake face of the cylinder head of said engine.

## Patentansprüche

1. Luftverteiler (10, 10') für Brennkraftmaschine, die wenigstens mehrere Zylinder (15, 16, 17, 18) in Reihe aufweist, wobei der Verteiler einen im Wesentlichen zylindrischen rohrförmigen Hauptkörper (24) aufweist, der mit seitlichen Verbindungskanälen (45, 46) für die Versorgung der Zylinder versehen ist, deren Abzweigungen (37, 38, 39, 40, 41, 42, 43, 44) mit dem rohrförmigen Hauptkörper im Wesentlichen ausgerichtet auf eine Erzeugende GA des rohrförmigen Hauptkörpers einmünden, wobei der rohrförmige Hauptkörper (24) stromaufseitig der Abzweigungen durch eine Biegung (30) von im Wesentlichen 180° verlängert ist, die in eine Lufteinlassöffnung (32) mündet, wobei die Biegung in Bezug auf die diametrale Ebene P3 des Hauptkörpers, die die Erzeugende GA, auf die die Abzweigungen ausgerichtet sind, enthält, um einen Winkel α geneigt ist, **dadurch gekennzeichnet, dass** er stromaufseitig oder in der Umgebung der Abzweigung(en) (37, 38) des oder der Verbindungskanäle (45, 46) des ersten verteilten Zylinders (15) und der Neigungsseite der Biegung eine Rampe (48) mit partieller Einschnürung des Luftauslassabschnitts des Hauptkörpers (24) aufweist.

2. Luftverteiler (10, 10') nach Anspruch 1, **dadurch gekennzeichnet, dass** er dazu ausgelegt ist, parallel zu der entsprechenden Einlassfläche (12) des Zylinderkopfes des Motors montiert zu werden, wobei sich die Verbindungskanäle (37, 38) gegenüber der Einlassleitungen (45, 46) des Zylinderkopfes, die einem Zylinder entsprechen, und parallel zu der Ausrichtung der Zylinder angeordnet sind, derart, dass die diametrale Ebene P3 zu der Einlassfläche (12) des Zylinderkopfes senkrecht ist.

3. Luftverteiler (10, 10') nach einem der Ansprüche 1 und 2, **dadurch gekennzeichnet, dass** der Grad der teilweisen Einschnürung im Bereich von 2 bis 10 % des Auslassabschnitts liegt.

4. Luftverteiler (10, 10') nach einem der Ansprüche 1 bis 3, **dadurch gekennzeichnet, dass** die Rampe (48) die Form einer asymmetrischen Sprungschanze aufweist, dessen stromaufseitige Fläche (50) und dessen stromabseitige Fläche (52) eine geringe bzw. eine starke Steigung haben.

5. Luftverteiler (10, 10') nach einem der Ansprüche 1 bis 4, **dadurch gekennzeichnet, dass** die Rampe (48) in Bezug auf die diametrale Ebene (P3) seitlich geneigt ist.

6. Luftverteiler (10, 10') nach Anspruch 5, **dadurch gekennzeichnet, dass** der Vorsprung des Scheitels (54) der Rampe (48) in der Ebene senkrecht zu dem rohrförmigen Körper (24) in Bezug auf die diametrale Ebene einen Neigungswinkel β aufweist, der im Bereich des ein- bis zweifachen Neigungswinkels α liegt.

7. Luftverteiler (10') nach einem der Ansprüche 1 bis 6, **dadurch gekennzeichnet, dass** er im Wesentlichen am Ausgang der Biegung (30) gegenüber und stromaufseitig der Rampe (48) eine zurückspringende Erhebung (60) aufweist, die sich im Wesentlichen senkrecht zu der Luftauslassrichtung im rohrförmigen Körper (24) erstreckt.

8. Luftverteiler (10') nach Anspruch 7, **dadurch gekennzeichnet, dass** die Erhebung (60) in der Luftauslassrichtung im rohrförmigen Körper (24) ein konvergentes/divergentes Profil (61, 63) aufweist.

9. Luftverteiler (10, 10') nach einem der Ansprüche 1 bis 8, **dadurch gekennzeichnet, dass** der zylindrische rohrförmige Hauptkörper (24) einen im Wesentlichen rechtwinkligen geraden Abschnitt (34) mit abgerundeten Ecken aufweist, dessen kleine Seite (36) der Seitenfläche des rohrförmigen Körpers gegenüber der Biegung (30) entspricht und die ausgerichteten Abzweigungen (37, 38, 39, 40, 41, 42, 43, 44) der Verbindungskanäle (45, 46) trägt.

10. Luftverteiler (10, 10') nach einem der Ansprüche 1 bis 9, **dadurch gekennzeichnet, dass** er zwei Einlass-Verbindungskanäle (37, 38) pro verteiltem Zylinder (15) aufweist.

11. Brennkraftmaschine, insbesondere für Kraftfahrzeug, mit wenigstens einem Luftverteiler nach einem der Ansprüche 1 bis 9 mit einem oder zwei Einlassverbindungskanälen pro verteiltem Zylinder, der an einer Einlassfläche des Zylinderkopfes der Maschine montiert ist.

12. Brennkraftmaschine des Diesel-Typs, insbesondere für Kraftfahrzeug, mit wenigstens einem Luftverteiler nach einem der Ansprüche 1 bis 9 mit einem oder zwei Verbindungskanälen pro verteiltem Zylinder, der an einer Einlassfläche des Zylinderkopfes der Maschine montiert ist.
